# EUROPÄISCHE PATENTSCHRIFT

(11) **EP 3 669 627 B1**
(45) Veröffentlichungstag und Bekanntmachung des Hinweises auf die Patenterteilung: **15.12.2021**
(21) Anmeldenummer: 19205620.8
(22) Anmeldetag: 28.10.2019
(51) Int. Cl.: A01D 34/00, G05D 1/02

(54) **AUTONOMES ARBEITSGERÄT**
AUTONOMOUS WORK DEVICE
ENGIN DE TRAVAIL AUTONOME

(30) Priorität: 18.12.2018 DE 102018222136
(43) Veröffentlichungstag der Anmeldung: 24.06.2020
(73) Patentinhaber: Robert Bosch GmbH, 70442 Stuttgart (DE)
(72) Erfinder: Johnson, William, Ipswich Suffolk, IP6 8JJ (GB)

(56) Entgegenhaltungen:
- EP-A1- 1 906 205
- EP-A1- 3 056 959
- WO-A1-2018/000922
- WO-A1-2018/194504
- DE-A1-102016 211 842
- US-A1- 2010 063 628

## Beschreibung

### Stand der Technik

In der EP 2 073 088 A2 ist bereits ein autonomes Arbeitsgerät, insbesondere ein Rasenmähroboter, mit zumindest einem Gehäuse, mit zumindest einer, insbesondere antriebsfreien, Radeinheit, mit zumindest einer Sensoreinheit zu einer Erkennung einer Bewegung der Radeinheit relativ zu dem Gehäuse und mit zumindest einer Steuer- und/oder Regeleinheit zumindest zu einer Verarbeitung von mittels der Sensoreinheit erfassten Signalen, vorgeschlagen worden. Die Steuer- und/oder Regeleinheit ist dazu eingerichtet, eine Bewegung des autonomen Arbeitsgeräts in Abhängigkeit von mittels der Sensoreinheit erfassten Signalen zu stoppen. Ferner sei auf die Druckschrift US 2010/063628 A1 verwiesen.

### Offenbarung der Erfindung

Die Erfindung betritt ein autonomen Arbeitsgerät mit den Merkmalen des Anspruchs 1 und ein Verfahren mit den Merkmalen des Anspruchs 7. Vorteilhafte Weiterbildungen sind in den abhängigen Ansprüchen angegeben.

Bevorzugt ist das autonome Arbeitsgerät als ein Rasenmähroboter ausgebildet. Alternativ ist denkbar, dass das autonome Arbeitsgerät als ein Rasenvertikutierroboter, als ein Bodenkehrroboter, als ein Schneeräumroboter, als ein Saugroboter, als ein Putzroboter oder als ein anderes, einem Fachmann als sinnvoll erscheinendes autonomes Arbeitsgerät ausgebildet. Vorzugsweise ist das autonome Arbeitsgerät dazu vorgesehen, während einer Fortbewegung über einen Untergrund, den Untergrund zu bearbeiten. Insbesondere ist das autonome Arbeitsgerät dazu vorgesehen, einen als einen Rasen ausgebildeten Untergrund zu mähen, einen als einen Fußboden ausgebildeten Untergrund zu saugen und/oder zu putzen o. dgl. Vorzugsweise umfasst das autonome Arbeitsgerät zu einer Bearbeitung eines Untergrunds zumindest eine Bodenbearbeitungseinheit, insbesondere ein Mähwerk. Bevorzugt ist die Bodenbearbeitungseinheit an einer, in einem Normalbetriebszustand des autonomen Arbeitsgeräts, einem Untergrund zugewandten Unterseite des Gehäuses des autonomen Arbeitsgeräts angeordnet. Insbesondere umfasst das autonome Arbeitsgerät zu einem Vortrieb über einen Untergrund zumindest eine Antriebsradeinheit, bevorzugt zumindest zwei Antriebsradeinheiten. Vorzugsweise weist die Antriebsradeinheit zumindest ein Antriebsrad auf, das zu einem Vortrieb des autonomen Arbeitsgeräts von einer Antriebseinheit, insbesondere mit zumindest einem Elektromotor, des autonomen Arbeitsgeräts um eine Radachse der Antriebsradeinheit rotatorisch antreibbar ist. Vorzugsweise ist die Steuer- und/oder Regeleinheit dazu eingerichtet, die Antriebseinheit zu steuern und/oder zu regeln. Insbesondere ist die Steuerund/oder Regeleinheit zu einer Lenkung des autonomen Arbeitsgeräts, insbesondere des Gehäuses, dazu eingerichtet, die, insbesondere als Differentialantriebseinheit ausgebildete, Antriebseinheit derart zu steuern und/oder zu regeln, dass die Antriebseinheit zwei verschiedene Antriebsradeinheiten, insbesondere Antriebsräder, unterschiedlich, insbesondere zu unterschiedlichen Rotationsgeschwindigkeiten um die Radachsen der Antriebsradeinheiten, antreibt. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Unter "vorgesehen" soll insbesondere speziell ausgestattet und/oder speziell eingerichtet verstanden werden. Unter "eingerichtet" soll insbesondere speziell programmiert und/oder speziell ausgelegt verstanden werden.

Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt.

Die Radeinheit ist vorzugsweise antriebsfrei, insbesondere frei von einem direkten Antrieb durch die Antriebseinheit, ausgebildet. Insbesondere umfasst die Radeinheit zumindest ein Rad, das bevorzugt als ein Stützrad ausgebildet ist. Vorzugsweise ist die Radeinheit versetzt zu der Antriebsradeinheit an dem Gehäuse, insbesondere an der Unterseite des Gehäuses, angeordnet, insbesondere gelagert. Bevorzugt kann das autonome Arbeitsgerät zumindest zwei Radeinheiten aufweisen, die versetzt zueinander und zu der Antriebsradeinheit an dem Gehäuse, insbesondere an der Unterseite des Gehäuses, angeordnet, insbesondere gelagert sind. Vorzugsweise ist die Radeinheit dazu vorgesehen, ein Gewicht des Gehäuses abzustützen. Vorzugsweise ist das Rad der Radeinheit dazu vorgesehen, während einer Fortbewegung des autonomen Arbeitsgeräts, insbesondere in Folge eines Antriebs durch die Antriebsradeinheit, um eine Radachse der Radeinheit zu rotieren. Vorzugsweise ist die Radeinheit um eine, insbesondere zumindest im Wesentlichen senkrecht zu der Radachse der Radeinheit und zu einer Hauptfortbewegungsrichtung des autonomen Arbeitsgeräts ausgerichtete, Hochachse der Radeinheit rotierbar an dem Gehäuse, insbesondere in einer an dem Gehäuse angeordneten Lagereinheit des autonomen Arbeitsgeräts, gelagert. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise ist die Radeinheit dazu vorgesehen, mittels einer Rotation um die Hochachse einem Lenkvorgang der Antriebsradeinheit zu folgen. Bevorzugt ist die Radachse der Radeinheit während einer Fortbewegung des autonomen Arbeitsgeräts in einem Normalbetriebszustand des autonomen Arbeitsgeräts zumindest im Wesentlichen senkrecht zu der Hauptfortbewegungsrichtung des autonomen Arbeitsgeräts ausgerichtet. Vorzugsweise ist die Radachse der Radeinheit während einer zumindest im Wesentlichen linearen Fortbewegung des autonomen Arbeitsgeräts in einem Normalbetriebszustand des autonomen Arbeitsgeräts zumindest im Wesentlichen senkrecht zu der Hauptfortbewegungsrichtung des autonomen Arbeitsgeräts und zumindest im Wesentlichen parallel zu der Radachse der Antriebsradeinheit ausgerichtet. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise ist die Radeinheit entlang der Hochachse translatorisch beweglich an dem Gehäuse, insbesondere in der Lagereinheit, gelagert.

Die Sensoreinheit umfasst zumindest ein Sensorelement zu einer Erfassung einer Bewegung der Radeinheit relativ zu dem Gehäuse. Das Sensorelement kann insbesondere als ein induktives Sensorelement, insbesondere als ein Induktivität-zu-Digital-Wandler, als ein magnetisches Sensorelement, insbesondere als ein Reedschalter oder als ein Hall-Sensor, als ein optisches Sensorelement oder als ein anderes, einem Fachmann als sinnvoll erscheinendes Sensorelement ausgebildet sein. Vorzugsweise umfasst die Sensoreinheit eine Mehrzahl von Sensorelementen. Insbesondere ist jeder Radeinheit des autonomen Arbeitsgeräts zumindest ein Sensorelement der Sensoreinheit zugeordnet. Die Sensorelemente können insbesondere auf einer gemeinsamen Platine, insbesondere mit der Steuer- und/oder Regeleinheit, oder getrennt voneinander angeordnet sein. Vorzugsweise sind die Sensorelemente signaltechnisch mit der Steuer- und/oder Regeleinheit verbunden, insbesondere über die gemeinsame Platine und/oder mittels zumindest eines Signalleitungselements, wie beispielsweise einem Kabel oder einem Draht. Die Sensoreinheit ist erfindungsgemäss zu einer Erfassung einer translatorischen Bewegung der Radeinheit entlang der Hochachse, zu einer Erfassung einer rotatorischen Bewegung der Radeinheit um die Hochachse und/oder vorzugsweise auch zu einer Erfassung einer rotatorischen Bewegung des Rads der Radeinheit um die Radachse der Radeinheit eingerichtet. Insbesondere ist die Radeinheit zumindest teilweise als ein Signalgeberelement ausgebildet, das von der Sensoreinheit zu einer Erfassung einer Bewegung der Radeinheit sensierbar ist. Insbesondere kann eine Führungsstange der Radeinheit, die in der Lagereinheit gelagert ist und an der das Rad der Radeinheit rotatorisch beweglich gelagert ist, als ein Signalgeberelement, insbesondere zu einer Erfassung einer translatorischen Bewegung der Radeinheit entlang der Hochachse, ausgebildet sein. Beispielsweise kann die Führungsstange aus einem magnetoresistiven Material, insbesondere aus einem Eisen, ausgebildet sein, wobei eine translatorische Bewegung der Radeinheit, insbesondere der Führungsstange, entlang der Hochachse durch die Sensoreinheit beispielsweise in Abhängigkeit von einer Änderung eines induzierten elektrischen Stroms in einem teilweise als Spule ausgebildeten Sensorelement sensierbar ist. Insbesondere können an, insbesondere in, einem Rad der Radeinheit Signalgeberelemente, insbesondere zu einer Erfassung einer rotatorischen Bewegung der Radeinheit um die Hochachse und/oder zu einer Erfassung einer rotatorischen Bewegung des Rads um die Radachse der Radeinheit, angeordnet sein. Beispielsweise ist denkbar, dass entlang eines zumindest im Wesentlichen vollständigen Umfangs des Rads magnetische Signalgeberelemente angeordnet sind, die von einem ortsfest an dem Gehäuse angeordneten magnetischen Sensorelement, insbesondere einem Hall-Sensor, insbesondere zu einer Erfassung einer rotatorischen Bewegung der Radeinheit um die Hochachse und/oder zu einer Erfassung einer rotatorischen Bewegung des Rads um die Radachse der Radeinheit, sensierbar sind.

Die Steuer- und/oder Regeleinheit ist vorzugsweise dazu eingerichtet, mittels der Sensoreinheit erfasste Signale, insbesondere mittels der Sensoreinheit erfasste Bewegungen der Radeinheit, zu einer Erkennung eines festgefahrenen Zustands und/oder eines feststeckenden Zustands des autonomen Arbeitsgeräts auszuwerten. Unter einem "festgefahrenen Zustand und/oder einem feststeckendem Zustand" des autonomen Arbeitsgeräts soll insbesondere ein Zustand des autonomen Arbeitsgeräts verstanden werden, in dem eine Fortbewegung des autonomen Arbeitsgeräts, insbesondere entlang einer ursprünglichen Fortbewegungsrichtung des autonomen Arbeitsgeräts, verhindert ist, insbesondere in Folge von durchdrehenden Antriebsrädern des autonomen Arbeitsgeräts, beispielsweise auf rutschigem Untergrund. Die Steuer- und/oder Regeleinheit ist vorzugsweise dazu eingerichtet, eine mittels der Sensoreinheit erfasste translatorische Bewegung der Radeinheit entlang der Hochachse, eine rotatorische Bewegung der Radeinheit um die Hochachse und/oder eine rotatorische Bewegung des Rads um die Radachse der Radeinheit, insbesondere in Kombination miteinander, zu einer Erkennung eines festgefahrenen Zustands und/oder eines feststeckenden Zustands des autonomen Arbeitsgeräts auszuwerten. Vorzugsweise ist die Steuer- und/oder Regeleinheit dazu eingerichtet, mittels der Sensoreinheit erfasste Bewegungen einer Mehrzahl von Radeinheiten, insbesondere in Kombination und/oder relativ zueinander, zu einer Erkennung eines festgefahrenen Zustands und/oder eines feststeckenden Zustands des autonomen Arbeitsgeräts auszuwerten. Bevorzugt ist die Steuer- und/oder Regeleinheit dazu eingerichtet, in Abhängigkeit von einem erkannten festgefahrenen Zustand und/oder feststeckenden Zustand des autonomen Arbeitsgeräts, die Antriebseinheit zu einer Wiederherstellung einer Bewegungsfähigkeit des autonomen Arbeitsgeräts anzusteuern und/oder einem Benutzer des autonomen Arbeitsgeräts den festgefahrenen Zustand und/oder den feststeckenden Zustand zu signalisieren.

Durch die erfindungsgemäße Ausgestaltung des autonomen Arbeitsgeräts kann vorteilhaft ein festgefahrener Zustand und/oder ein feststeckender Zustand des autonomen Arbeitsgeräts erkannt werden und Gegenmaßnahmen eingeleitet werden, wobei vorteilhaft eine zügige Bodenbearbeitung ermöglicht werden kann. Vorteilhaft kann eine Beschädigung eines Untergrunds, insbesondere eines Rasens, aufgrund durchdrehender Antriebsräder des autonomen Arbeitsgeräts verhindert oder zumindest gering gehalten werden. Vorteilhaft kann ein Schmutzaufbau an dem autonomen Arbeitsgerät gering gehalten und eine vorteilhaft zumindest im Wesentlichen konstante Bodenbearbeitungsleistung des autonomen Arbeitsgeräts ermöglicht werden.

Des Weiteren wird vorgeschlagen, dass das autonome Arbeitsgerät zumindest eine Lagereinheit, insbesondere die vorgenannte Lagereinheit, umfasst, die zu einer translatorisch entlang einer zumindest im Wesentlichen senkrecht zu einer Hauptfortbewegungsrichtung und zu einer Radachse der Radeinheit ausgerichteten Hochachse der Radeinheit beweglichen Lagerung der Radeinheit an dem Gehäuse vorgesehen ist, wobei die Steuer- und/oder Regeleinheit dazu eingerichtet ist, einen festgefahrenen Zustand und/oder einen feststeckenden Zustand auf Basis von einer Erkennung einer translatorischen Bewegung der Radeinheit zumindest im Wesentlichen senkrecht zu der Hauptfortbewegungsrichtung und zu der Radachse der Radeinheit durch die Sensoreinheit zu erkennen. Insbesondere entspricht eine translatorische Bewegung der Radeinheit zumindest im Wesentlichen senkrecht zu der Hauptfortbewegungsrichtung des autonomen Arbeitsgeräts und zu der Radachse der Radeinheit zumindest im Wesentlichen einer translatorischen Bewegung der Radeinheit entlang der Hochachse der Radeinheit. Insbesondere ist die Führungsstange der Radeinheit translatorisch und rotatorisch beweglich in der Lagereinheit gelagert. Insbesondere ist die Lagereinheit zumindest teilweise als ein Gleitlager ausgebildet. Vorzugsweise ist die Führungsstange gegen ein Herausfallen aus der Lagereinheit gesichert, beispielhaft mittels eines Sprengringelements. Vorzugsweise ist die Lagereinheit zumindest im Wesentlichen schmutz- und/oder wasserdicht abgedichtet, beispielhaft mittels eines Dichtelements. Vorzugsweise weist die Lagereinheit zumindest ein Dämpfungselement auf, an dem die Radeinheit in einem Normalbetriebszustand des autonomen Arbeitsgeräts zumindest abschnittsweise anliegt.

Vorzugsweise weist die Sensoreinheit zu einer Erfassung einer translatorischen Bewegung der Radeinheit entlang der Hochachse zumindest ein induktives Sensorelement, insbesondere einen Induktivität-zu-Digital-Wandler mit zumindest einer Spule, auf, durch die sich die Führungsstange translatorisch bewegt und aufgrund ihrer magnetoresistiven Eigenschaften in Abhängigkeit von unterschiedlichen Positionen relativ zu dem Sensorelement, insbesondere zu der Spule, unterschiedliche elektrische Ströme in der Spule induziert. Alternativ oder zusätzlich ist denkbar, dass eine translatorische Bewegung der Radeinheit entlang der Hochachse mittels eines magnetischen Sensorelements, mittels eines optischen Sensorelements oder mittels eines anderen, einem Fachmann als sinnvoll erscheinenden Sensorelements erkannt wird. Vorzugsweise bewegt sich die Radeinheit während einer Fortbewegung des autonomen Arbeitsgeräts über einen zumindest teilweise unebenen Untergrund, wie beispielsweise einen Rasen, zumindest im Wesentlichen dauerhaft translatorisch entlang der Hochachse. Insbesondere ist die Steuer- und/oder Regeleinheit dazu eingerichtet, in Abhängigkeit von einem Ausbleiben einer translatorischen Bewegung der Radeinheit entlang der Hochachse, insbesondere über einen vorbestimmten Zeitraum hinweg, einen festgefahrenen Zustand und/oder einen feststeckenden Zustand des autonomen Arbeitsgeräts zu erkennen. Vorzugsweise ist die Steuer- und/oder Regeleinheit eines autonomen Arbeitsgeräts mit einer Mehrzahl von Radeinheiten dazu eingerichtet, in Abhängigkeit von einem Ausbleiben von translatorischen Bewegungen der Mehrzahl von Radeinheiten entlang der Hochachse, insbesondere über einen vorbestimmten Zeitraum hinweg, einen festgefahrenen Zustand und/oder einen feststeckenden Zustand des autonomen Arbeitsgeräts zu erkennen. Vorzugsweise ist die Steuer- und/oder Regeleinheit dazu eingerichtet, in Abhängigkeit von einer translatorischen Bewegung der Radeinheit entlang der Hochachse zumindest einen zumindest im Wesentlichen vollständig auf einem Untergrund befindlichen Zustand des autonomen Arbeitsgeräts von einem zumindest teilweise von einem Untergrund losgelösten Zustand des autonomen Arbeitsgeräts zu unterscheiden. Vorteilhaft kann eine zuverlässige, insbesondere radrotationsunabhängige, Möglichkeit zu einer Erkennung eines festeckenden Zustands und/oder eines festgefahrenen Zustands des autonomen Arbeitsgeräts bereitgestellt werden.

Ferner wird vorgeschlagen, dass die Sensoreinheit dazu eingerichtet ist, eine Bewegung der Radeinheit relativ zu dem Gehäuse, insbesondere zumindest im Wesentlichen senkrecht zu einer Hauptfortbewegungsrichtung und zu einer Radachse der Radeinheit, in einem Bewegungsbereich zwischen höchstens 1 mm und höchstens 16 mm zu erkennen, in dem die Steuer- und/oder Regeleinheit zu einer Erkennung eines festgefahrenen Zustands und/oder eines feststeckenden Zustands eingerichtet ist. Insbesondere ist die Sensoreinheit dazu eingerichtet, eine translatorische Bewegung der Radeinheit entlang der Hochachse in einem Bewegungsbereich zwischen zumindest 1 mm und höchstens 16 mm, bevorzugt in einem Bewegungsbereich zwischen zumindest 0,5 mm und höchstens 16 mm und besonders bevorzugt in einem Bewegungsbereich zwischen zumindest 0,1 mm und höchstens 16 mm zu erkennen. Insbesondere ist die Steuer- und/oder Regeleinheit dazu eingerichtet, auf Basis von der Erkennung einer translatorischen Bewegung der Radeinheit entlang der Hochachse einen festgefahrenen Zustand und/oder einen feststeckenden Zustand des autonomen Arbeitsgeräts auf einem Untergrund mit lokalen Höhenunterschieden in einem Bereich zwischen zumindest 1 mm und höchstens 16 mm, bevorzugt in einem Bereich zwischen zumindest 0,5 mm und höchstens 16 mm und besonders bevorzugt in einem Bereich zwischen zumindest 0,1 mm und höchstens 16 mm zu erkennen. Insbesondere weist das Sensorelement, insbesondere die Spule, eine maximale Erstreckung entlang der Hochachse und/oder eine Sensitivität auf, die eine Erkennung einer translatorischen Bewegung der Radeinheit entlang der Hochachse in einem Bewegungsbereich zwischen mindestens 1 mm und höchstens 16 mm, bevorzugt in einem Bewegungsbereich zwischen mindestens 0,5 mm und höchstens 16 mm und besonders bevorzugt in einem Bewegungsbereich zwischen mindestens 0,1 mm und höchstens 16 mm ermöglicht. Vorteilhaft kann eine Erkennung eines festgefahrenen Zustands und/oder eines feststeckenden Zustands des autonomen Arbeitsgeräts auf Untergründen mit geringen Unebenheiten ermöglicht werden.

Weiterhin wird vorgeschlagen, dass das autonome Arbeitsgerät zumindest einen von der Steuer- und/oder Regeleinheit betreibbaren Remobilisationsmodus zu einer Wiederherstellung einer Bewegungsfähigkeit umfasst, der auf Basis von der Erkennung der Bewegung der Radeinheit relativ zum Gehäuse, insbesondere zumindest im Wesentlichen senkrecht zu einer Hauptfortbewegungsrichtung und zu einer Radachse der Radeinheit, durch die Sensoreinheit von der Steuerund/oder Regeleinheit auslösbar ist. Vorzugsweise ist der Remobilisationsmodus in Form von elektronischen Daten, insbesondere Steuerbefehlen, in der Speichereinheit der Steuer- und/oder Regeleinheit hinterlegt. Vorzugsweise ist der Remobilisationsmodus als ein Bewegungsmodus des autonomen Arbeitsgeräts ausgebildet, der zumindest eine Bewegung, insbesondere eine Bewegungsfolge, des autonomen Arbeitsgeräts umfasst. Bevorzugt ist die Steuer- und/oder Regeleinheit dazu eingerichtet, in dem Remobilisationsmodus die Antriebseinheit derart zu steuern und/oder zu regeln, dass das autonome Arbeitsgerät wendet und sich entgegen einer ursprünglichen Fortbewegungsrichtung bewegt. Alternativ ist denkbar, dass das autonome Arbeitsgerät sich in dem Remobilisationsmodus rückwärts entgegen der ursprünglichen Fortbewegungsrichtung bewegt o. dgl. Vorteilhaft kann eine Bewegungsfähigkeit des autonomen Arbeitsgeräts zumindest im Wesentlichen automatisch wiederhergestellt werden. Vorteilhaft kann ein nutzerkomfortables autonomes Arbeitsgerät bereitgestellt werden.

Zudem wird vorgeschlagen, dass das autonome Arbeitsgerät zumindest eine Antriebsradeinheit, insbesondere die vorgenannte Antriebsradeinheit, umfasst, wobei die Steuer- und/oder Regeleinheit zu einer Erkennung eines festgefahrenen Zustands und/oder eines feststeckenden Zustands auf Basis von der Erkennung der Bewegung der Radeinheit relativ zum Gehäuse, insbesondere zumindest im Wesentlichen senkrecht zu einer Hauptfortbewegungsrichtung und zu einer Radachse der Radeinheit, und in Abhängigkeit von einer Rotationsbewegung der Antriebsradeinheit eingerichtet ist. Insbesondere ist die Steuerund/oder Regeleinheit zu einer Erkennung eines festgefahrenen Zustands und/oder eines feststeckenden Zustands auf Basis von der Erkennung einer translatorischen Bewegung der Radeinheit entlang der Hochachse und in Abhängigkeit von einer Rotationsbewegung des Antriebsrads um die Radachse der Antriebsradeinheit eingerichtet. Vorzugsweise ist die Antriebsradeinheit entlang einer zumindest im Wesentlichen parallel zu der Hochachse ausgerichteten Richtung betrachtet zumindest im Wesentlichen starr an dem Gehäuse gelagert. Vorzugsweise umfasst das autonome Arbeitsgerät zu einer Erkennung einer Bewegung der Antriebsradeinheit, insbesondere des Antriebsrads, zumindest eine weitere, insbesondere zumindest im Wesentlichen analog zu der Sensoreinheit ausgebildete, Sensoreinheit. Bevorzugt ist die Steuer- und/oder Regeleinheit dazu eingerichtet, von der Sensoreinheit und von der weiteren Sensoreinheit bereitgestellte Signale gemeinsam auszuwerten. Insbesondere ist die Steuerund/oder Regeleinheit dazu eingerichtet, eine translatorische Bewegung der Radeinheit entlang der Hochachse in Abhängigkeit von einer Erkennung einer Rotationsbewegung des Antriebsrads um die Radachse der Antriebsradeinheit, insbesondere in Abhängigkeit von einer Erkennung eines Vorhandenseins einer Rotationsbewegung des Antriebsrads um die Radachse der Antriebsradeinheit, zu einer Erkennung eines festgefahrenen Zustands und/oder eines feststeckenden Zustands des autonomen Arbeitsgeräts auszuwerten. Vorteilhaft kann eine Notwendigkeit einer Ermittlung eines festgefahrenen Zustands und/oder eines feststeckenden Zustands auf Basis von der Erkennung einer Bewegung der Radeinheit ermittelt werden. Vorteilhaft kann Rechenkapazität eingespart werden.

Des Weiteren wird vorgeschlagen, dass die Steuer- und/oder Regeleinheit dazu eingerichtet ist, einen festgefahrenen Zustand und/oder einen feststeckenden Zustand auf Basis von einer Erkennung einer Rotationsbewegung zumindest eines Rads der Radeinheit um eine Radachse der Radeinheit und/oder einer Rotationsbewegung der Radeinheit um eine Hochachse der Radeinheit durch die Sensoreinheit, insbesondere in Kombination mit einer Erkennung einer translatorischen Bewegung der Radeinheit zumindest im Wesentlichen senkrecht zu einer Hauptfortbewegungsrichtung und zu einer Radachse der Radeinheit durch die Sensoreinheit, zu erkennen. Vorzugsweise ist die Steuer- und/oder Regeleinheit dazu eingerichtet, eine Rotationsbewegung des Rads um die Radachse der Radeinheit und/oder eine Rotationsbewegung der Radeinheit um die Hochachse zu einer Erkennung eines Funktionszustands der Erkennung einer translatorischen Bewegung der Radeinheit entlang der Hochachse auszuwerten. Beispielsweise ist denkbar, dass eine Schmutzanlagerung eine translatorische Bewegung der Radeinheit entlang der Hochachse und eine Rotationsbewegung um die Hochachse blockiert. Vorzugsweise ist die Steuer- und/oder Regeleinheit dazu eingerichtet, auf Basis von einer Erkennung eines Vorhandenseins einer Rotationsbewegung des Rads der Radeinheit um die Radachse der Radeinheit, einer Erkennung eines Ausbleibens einer Rotationsbewegung der Radeinheit um die Hochachse und einer Erkennung eines Ausbleibens einer translatorischen Bewegung der Radeinheit entlang der Hochachse eine Hemmung der Führungsstange der Radeinheit zu erkennen. Vorteilhaft kann eine Wahrscheinlichkeit einer Fehlerkennung eines festgefahrenen und/oder feststeckenden Zustands des autonomen Arbeitsgeräts gering gehalten werden.

Ferner geht die Erfindung aus von einem Verfahren zu einem Betrieb eines autonomen Arbeitsgeräts, insbesondere eines erfindungsgemäßen autonomen Arbeitsgeräts, mit den Merkmalen des Anspruchs 7.

Es wird vorgeschlagen, dass in zumindest einem Verfahrensschritt ein festgefahrener Zustand und/oder ein feststeckender Zustand des autonomen Arbeitsgeräts auf Basis von einer Erkennung einer Bewegung zumindest einer Radeinheit des autonomen Arbeitsgeräts relativ zu zumindest einem Gehäuse des autonomen Arbeitsgeräts erkannt wird/werden. Vorteilhaft kann ein Verfahren bereitgestellt werden, mittels dessen ein festgefahrener Zustand und/oder ein feststeckender Zustand des autonomen Arbeitsgeräts erkannt werden und Gegenmaßnahmen eingeleitet werden können, wobei vorteilhaft ein zügige Bodenbearbeitung ermöglicht werden kann.

Weiterhin wird vorgeschlagen, dass in zumindest einem Verfahrensschritt ein festgefahrener Zustand und/oder ein feststeckender Zustand des autonomen Arbeitsgeräts auf Basis von einer Erkennung einer translatorischen Bewegung der Radeinheit zumindest im Wesentlichen senkrecht zu einer Hauptfortbewegungsrichtung des autonomen Arbeitsgeräts und zu einer Radachse der Radeinheit erkannt wird/werden. Vorteilhaft kann ein zuverlässiges, insbesondere radrotationsunabhängiges, Verfahren zu einer Erkennung eines festeckenden Zustands und/oder eines festgefahrenen Zustands des autonomen Arbeitsgeräts bereitgestellt werden.

Zudem wird vorgeschlagen, dass in zumindest einem Verfahrensschritt ein festgefahrener Zustand und/oder ein feststeckender Zustand des autonomen Arbeitsgeräts auf Basis von der Erkennung der Bewegung der Radeinheit relativ zum Gehäuse, insbesondere zumindest im Wesentlichen senkrecht zu einer Hauptfortbewegungsrichtung des autonomen Arbeitsgeräts und zu einer Radachse der Radeinheit, und in Abhängigkeit von einer Rotationsbewegung zumindest einer Antriebsradeinheit des autonomen Arbeitsgeräts erkannt wird/werden. Vorteilhaft kann eine Notwendigkeit einer Ermittlung eines festgefahrenen Zustands und/oder eines feststeckenden Zustands auf Basis von der Erkennung einer Bewegung der Radeinheit ermittelt werden. Vorteilhaft kann ein Rechenkapazität einsparendes Verfahren bereitgestellt werden.

Des Weiteren wird vorgeschlagen, dass in zumindest einem Verfahrensschritt ein Remobilisationsmodus des autonomen Arbeitsgeräts zu einer Wiederherstellung einer Bewegungsfähigkeit auf Basis von der Erkennung der Bewegung der Radeinheit relativ zum Gehäuse, insbesondere zumindest im Wesentlichen senkrecht zu einer Hauptfortbewegungsrichtung des autonomen Arbeitsgeräts und zu einer Radachse der Radeinheit, ausgelöst wird. Vorteilhaft kann eine Bewegungsfähigkeit des autonomen Arbeitsgeräts zumindest im Wesentlichen automatisch wiederhergestellt werden. Vorteilhaft kann ein Verfahren zu einem nutzerkomfortablen Betrieb des autonomen Arbeitsgeräts bereitgestellt werden.

Ferner wird vorgeschlagen, dass in zumindest einem Verfahrensschritt ein festgefahrener Zustand und/oder ein feststeckender Zustand des autonomen Arbeitsgeräts auf Basis von einer Erkennung einer Rotationsbewegung zumindest eines Rads der Radeinheit um eine Radachse der Radeinheit und/oder einer Rotationsbewegung der Radeinheit um eine Hochachse der Radeinheit, insbesondere in Kombination mit einer Erkennung einer translatorischen Bewegung der Radeinheit zumindest im Wesentlichen senkrecht zu einer Hauptfortbewegungsrichtung und zu einer Radachse der Radeinheit, erkannt wird/werden. Vorteilhaft kann eine Wahrscheinlichkeit einer Fehlerkennung eines festgefahrenen und/oder feststeckenden Zustands des autonomen Arbeitsgeräts gering gehalten werden.

Weiterhin wird vorgeschlagen, dass in zumindest einem Verfahrensschritt ein festgefahrener Zustand und/oder ein feststeckender Zustand des autonomen Arbeitsgeräts auf Basis von der Erkennung der Bewegung der Radeinheit relativ zu dem Gehäuse erkannt wird/werden, wobei die Bewegung der Radeinheit mittels zumindest eines induktiven Sensorelements, insbesondere zumindest eines Induktivität-zu-Digital-Wandlers, mittels zumindest eines magnetischen Sensorelements, insbesondere zumindest eines Reedschalters und/oder zumindest eines Hall-Sensors, und/oder mittels zumindest eines optischen Sensorelements zumindest einer Sensoreinheit des autonomen Arbeitsgeräts erkannt wird. Vorteilhaft kann ein vielfältig, insbesondere mittels einer Vielzahl von verschiedenen Komponenten, durchführbares Verfahren bereitgestellt werden.

Das erfindungsgemäße autonome Arbeitsgerät und/oder das erfindungsgemäße Verfahren sollen/soll hierbei nicht auf die oben beschriebene Anwendung und Ausführungsform beschränkt sein. Insbesondere können/kann das erfindungsgemäße autonome Arbeitsgerät und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes autonomes Arbeitsgerät in einer perspektivischen Darstellung,
- Fig. 2: das erfindungsgemäße autonome Arbeitsgerät aus Fig. 1 in einer weiteren perspektivischen Darstellung,
- Fig. 3: eine Teilansicht des erfindungsgemäßen autonomen Arbeitsgeräts aus Fig. 1 in einer schematischen Darstellung,
- Fig. 4: eine Teilansicht des erfindungsgemäßen autonomen Arbeitsgeräts aus Fig. 1 in einer schematischen Schnittdarstellung,
- Fig. 5: eine Platine des erfindungsgemäßen autonomen Arbeitsgeräts aus Fig. 1 in einer schematischen Darstellung und
- Fig. 6: ein Ablaufdiagramm eines erfindungsgemäßen Verfahrens zum Betrieb eines autonomen Arbeitsgeräts in einer schematischen Darstellung.

### Beschreibung des Ausführungsbeispiels

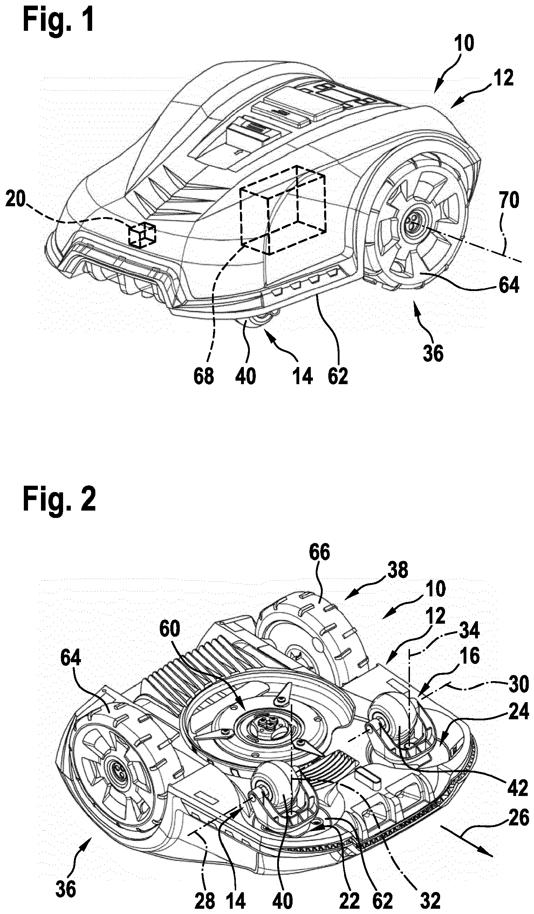

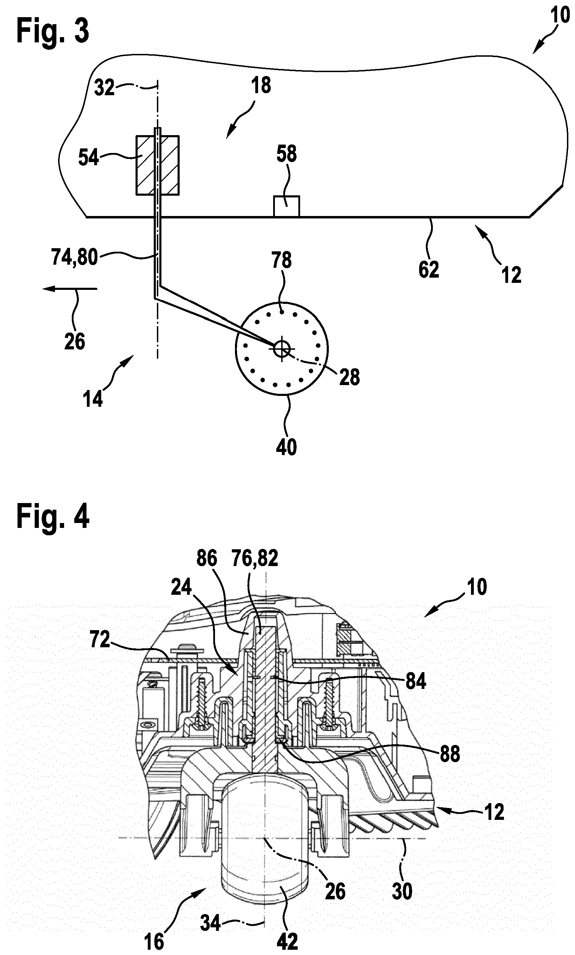

Figur 1 zeigt ein autonomes Arbeitsgerät 10 in einer perspektivischen Darstellung. Vorzugsweise umfasst das autonome Arbeitsgerät 10 zumindest ein Gehäuse 12, zumindest eine, insbesondere antriebsfreie, Radeinheit 14, 16, zumindest eine Sensoreinheit 18 zu einer Erkennung einer Bewegung der Radeinheit 14, 16 relativ zu dem Gehäuse 12 und zumindest eine Steuer- und/oder Regeleinheit 20 zumindest zu einer Verarbeitung von mittels der Sensoreinheit 18 erfassten Signalen. Bevorzugt ist die Steuer- und/oder Regeleinheit 20 zu einer Erkennung eines festgefahrenen Zustands und/oder eines feststeckenden Zustands auf Basis von der Erkennung der Bewegung der zumindest einen Radeinheit 14, 16 relativ zum Gehäuse 12 durch die Sensoreinheit 18 eingerichtet (vgl. Figur 3).

Bevorzugt ist das autonome Arbeitsgerät 10 als ein Rasenmähroboter ausgebildet. Im vorliegenden Ausführungsbeispiel ist das autonome Arbeitsgerät 10 als ein Rasenmähroboter ausgebildet. Alternativ ist denkbar, dass das autonome Arbeitsgerät 10 als ein Rasenvertikutierroboter, als ein Bodenkehrroboter, als ein Schneeräumroboter, als ein Saugroboter, als ein Putzroboter oder als ein anderes, einem Fachmann als sinnvoll erscheinendes autonomes Arbeitsgerät ausgebildet. Vorzugsweise ist das autonome Arbeitsgerät 10 dazu vorgesehen, während einer Fortbewegung über einen Untergrund, den Untergrund zu bearbeiten (Untergrund hier nicht weiter dargestellt). Insbesondere ist das autonome Arbeitsgerät 10 dazu vorgesehen, einen als einen Rasen ausgebildeten Untergrund zu mähen, wie im vorliegenden Ausführungsbeispiel, einen als einen Fußboden ausgebildeten Untergrund zu saugen und/oder zu putzen o. dgl. Vorzugsweise umfasst das autonome Arbeitsgerät 10 zu einer Bearbeitung eines Untergrunds zumindest eine Bodenbearbeitungseinheit 60, insbesondere ein Mähwerk (vgl. Figur 2). Bevorzugt ist die Bodenbearbeitungseinheit 60 an einer in einem Normalbetriebszustand des autonomen Arbeitsgeräts 10 einem Untergrund zugewandten Unterseite 62 des Gehäuses 12 des autonomen Arbeitsgeräts 10 angeordnet. Insbesondere umfasst das autonome Arbeitsgerät 10 zu einem Vortrieb über einen Untergrund zumindest eine Antriebsradeinheit 36, 38, bevorzugt zumindest zwei Antriebsradeinheiten 36, 38. Im vorliegenden Ausführungsbeispiel weist das autonome Arbeitsgerät 10 beispielhaft eine Antriebsradeinheit 36 und eine weitere Antriebsradeinheit 38 auf. Aufgrund der perspektivischen Darstellung ist in Figur 1 lediglich die Antriebsradeinheit 36 zu erkennen. Vorzugsweise weisen die Antriebsradeinheiten 36, 38 jeweils zumindest ein Antriebsrad 64, 66 auf, das zu einem Vortrieb des autonomen Arbeitsgeräts 10 von einer Antriebseinheit 68, insbesondere mit zumindest einem Elektromotor, des autonomen Arbeitsgeräts 10 um eine Radachse 70 der Antriebsradeinheiten 36, 38 rotatorisch antreibbar ist. Vorzugsweise ist die Steuer- und/oder Regeleinheit 20 dazu eingerichtet, die Antriebseinheit 68 zu steuern und/oder zu regeln.
Insbesondere ist die Steuer- und/oder Regeleinheit 20 zu einer Lenkung des autonomen Arbeitsgeräts 10, insbesondere des Gehäuses 12, dazu eingerichtet, die, insbesondere als Differentialantriebseinheit ausgebildete, Antriebseinheit 68 derart zu steuern und/oder zu regeln, dass die Antriebseinheit 68 die zwei verschiedenen Antriebsradeinheiten 36, 38, insbesondere die Antriebsräder 64, 66, unterschiedlich, insbesondere zu unterschiedlichen Rotationsgeschwindigkeiten um die Radachse 70 der Antriebsradeinheiten 36, 38, antreibt.

Figur 2 zeigt das autonome Arbeitsgerät 10 aus Fig. 1 in einer weiteren perspektivischen Darstellung. Dargestellt ist die Unterseite 62 des Gehäuses 12 des autonomen Arbeitsgeräts 10. Im vorliegenden Ausführungsbeispiel umfasst das autonome Arbeitsgerät 10 beispielhaft eine Radeinheit 14 und eine weitere Radeinheit 16. Die Radeinheiten 14, 16 sind vorzugsweise antriebsfrei, insbesondere frei von einem direkten Antrieb durch die Antriebseinheit 68, ausgebildet. Insbesondere umfassen die Radeinheiten jeweils zumindest ein Rad 40, 42, das bevorzugt als ein Stützrad ausgebildet ist. Vorzugsweise sind die Radeinheiten 14, 16 versetzt zu den Antriebsradeinheiten 36, 38 an dem Gehäuse 12, insbesondere an der Unterseite 62 des Gehäuses 12, angeordnet, insbesondere gelagert. Die Radeinheiten 14, 16 sind versetzt zueinander und zu den Antriebsradeinheiten 36, 38 an dem Gehäuse 12, insbesondere an der Unterseite 62 des Gehäuses 12, angeordnet, insbesondere gelagert. Die Radeinheiten 14, 16 sind dazu vorgesehen, ein Gewicht des Gehäuses 12 abzustützen. Vorzugsweise sind die Räder 40, 42 der Radeinheiten 14, 16 dazu vorgesehen, während einer Fortbewegung des autonomen Arbeitsgeräts 10, insbesondere in Folge eines Antriebs durch die Antriebsradeinheiten 36, 38, um Radachsen 28, 30 der Radeinheiten 14, 16 zu rotieren. Vorzugsweise sind die Radeinheiten 14, 16 jeweils um eine, insbesondere zumindest im Wesentlichen senkrecht zu den Radachsen 28, 30 der Radeinheiten 14, 16 und zu einer Hauptfortbewegungsrichtung 26 des autonomen Arbeitsgeräts 10 ausgerichtete, Hochachse 32, 34 der Radeinheiten 14, 16 rotierbar an dem Gehäuse 12, insbesondere in jeweils einer an dem Gehäuse 12 angeordneten Lagereinheit 22, 24 des autonomen Arbeitsgeräts 10, gelagert. Vorzugsweise sind die Radeinheiten 14, 16 dazu vorgesehen, mittels einer Rotation um die Hochachsen 32, 34 einem Lenkvorgang der Antriebsradeinheiten 36, 38 zu folgen. Bevorzugt sind die Radachsen 28, 30 der Radeinheiten 14, 16 während einer Fortbewegung des autonomen Arbeitsgeräts 10 in einem Normalbetriebszustand des autonomen Arbeitsgeräts 10 zumindest im Wesentlichen senkrecht zu der Hauptfortbewegungsrichtung 26 des autonomen Arbeitsgeräts 10 ausgerichtet. Vorzugsweise sind die Radachsen 28, 30 der Radeinheiten 14, 16 während einer zumindest im Wesentlichen linearen Fortbewegung des autonomen Arbeitsgeräts 10 in einem Normalbetriebszustand des autonomen Arbeitsgeräts 10 zumindest im Wesentlichen senkrecht zu der Hauptfortbewegungsrichtung 26 des autonomen Arbeitsgeräts 10 und zumindest im Wesentlichen parallel zu der Radachse 70 der Antriebsradeinheiten 36, 38 ausgerichtet. Vorzugsweise sind die Radeinheiten 14, 16 entlang jeweils einer der Hochachsen 32, 34 translatorisch beweglich an dem Gehäuse 12, insbesondere in jeweils einer der Lagereinheiten 22, 24, gelagert.

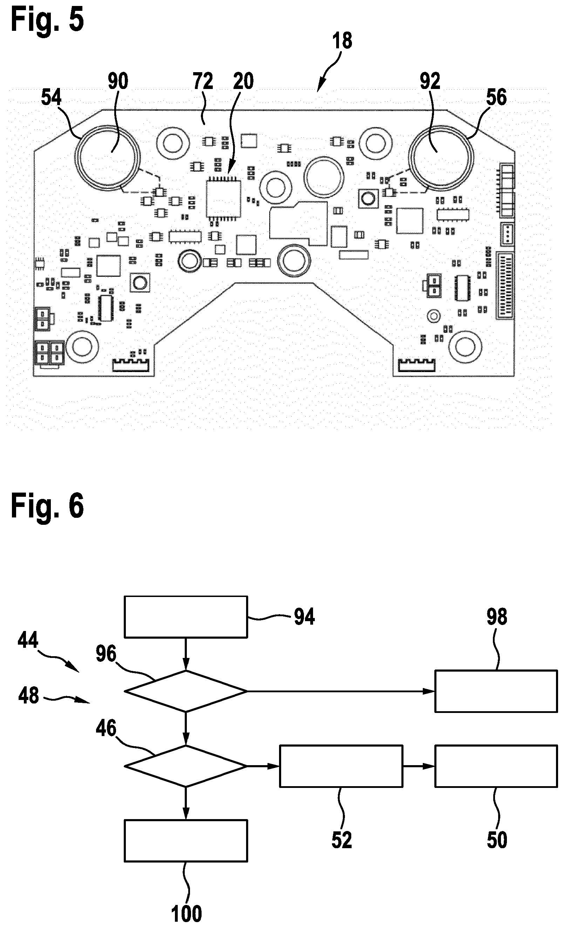

Figur 3 zeigt eine Teilansicht des erfindungsgemäßen autonomen Arbeitsgeräts 10 aus Fig. 1 in einer schematischen Darstellung. Dargestellt ist eine Seitenansicht des autonomen Arbeitsgeräts 10 in einem Teilbereich der Unterseite 62 des Gehäuses 12. Die Sensoreinheit 18 umfasst vorzugsweise zumindest ein Sensorelement 54, 56, 58 zu einer Erfassung einer Bewegung der Radeinheiten 14, 16 relativ zu dem Gehäuse 12. Im vorliegenden Ausführungsbeispiel umfasst die Sensoreinheit 18 beispielhaft eine Mehrzahl von Sensorelementen 54, 56, 58, insbesondere ein induktives Sensorelement 54, insbesondere einen Induktivität-zu-Digital-Wandler, das der Radeinheit 14 zugeordnet ist, ein magnetisches Sensorelement 58, insbesondere einen Hall-Sensor, das der Radeinheit 14 zugeordnet ist, ein weiteres induktives Sensorelement 56, insbesondere einen Induktivität-zu-Digital-Wandler, das der weiteren Radeinheit 16 zugeordnet ist und ein weiteres magnetisches Sensorelement, insbesondere einen Hall-Sensor, das der weiteren Radeinheit 16 zugeordnet ist. Alternativ oder zusätzlich ist denkbar, dass zumindest eines der magnetischen Sensorelemente 58 als ein Reedschalter ausgebildet ist und/oder dass die Sensoreinheit 18 zumindest ein optisches Sensorelement umfasst. Aufgrund der Darstellung sind die der weiteren Radeinheit 16 zugeordneten Sensorelemente 56 in Figur 3 nicht zu erkennen. Die Sensorelemente 54, 56, 58 können insbesondere auf einer gemeinsamen Platine 72, insbesondere mit der Steuer- und/oder Regeleinheit 20, oder getrennt voneinander angeordnet sein (vgl. Figur 5). Vorzugsweise sind die Sensorelemente 54, 56, 58 signaltechnisch mit der Steuer- und/oder Regeleinheit 20 verbunden, insbesondere über die gemeinsame Platine 72 und/oder mittels zumindest eines Signalleitungselements, wie beispielsweise einem Kabel oder einem Draht. Die Sensoreinheit 18 ist vorzugsweise zu einer Erfassung einer translatorischen Bewegung der Radeinheiten 14, 16 entlang der Hochachsen 32, 34, zu einer Erfassung einer rotatorischen Bewegung der Radeinheiten 14, 16 um die Hochachsen 32, 34 und/oder zu einer Erfassung einer rotatorischen Bewegung der Räder 40, 42 der Radeinheiten 14, 16 um die Radachsen 28, 30 der Radeinheiten 14, 16 eingerichtet. Insbesondere sind die Radeinheiten 14, 16 zumindest teilweise als Signalgeberelemente 74, 76, 78 ausgebildet, die von der Sensoreinheit 18 zu einer Erfassung einer Bewegung der Radeinheiten 14, 16 sensierbar sind. Insbesondere ist jeweils eine Führungsstange 80, 82 jeweils einer der Radeinheiten 14, 16, die in jeweils einer der Lagereinheiten 22, 24 gelagert ist und an der jeweils ein Rad 40, 42 der Radeinheiten 14, 16 rotatorisch beweglich gelagert ist, als ein Signalgeberelement 74, 76, insbesondere zu einer Erfassung einer translatorischen Bewegung der Radeinheiten 14, 16 entlang der Hochachsen 32, 34, ausgebildet. Insbesondere sind die Führungsstangen 80, 82 aus einem magnetoresistiven Material, insbesondere aus einem Eisen, ausgebildet, wobei eine translatorische Bewegung der Radeinheiten 14, 16, insbesondere der Führungsstangen 80, 82, entlang der Hochachsen 32, 34 durch die Sensoreinheit 18 in Abhängigkeit von einer Änderung eines induzierten elektrischen Stroms in den teilweise als Spule ausgebildeten induktiven Sensorelementen 54, 56 sensierbar ist. Insbesondere sind an, insbesondere in, den Rädern 40, 42 der Radeinheiten 14, 16 weitere Signalgeberelemente 78, insbesondere zu einer Erfassung einer rotatorischen Bewegung der Radeinheiten 14, 16 um die Hochachsen 32, 34 und/oder zu einer Erfassung einer rotatorischen Bewegung der Räder 40, 42 um die Radachsen 28, 30 der Radeinheiten 14, 16, angeordnet. Entlang eines zumindest im Wesentlichen vollständigen Umfangs der Räder 40, 42 sind magnetische Signalgeberelemente 78 angeordnet, die von den ortsfest an dem Gehäuse 12 angeordneten magnetischen Sensorelementen 58, insbesondere zu einer Erfassung einer rotatorischen Bewegung der Radeinheiten 14, 16 um die Hochachsen 32, 34 und/oder zu einer Erfassung einer rotatorischen Bewegung der Räder 40, 42 um die Radachsen 28, 30 der Radeinheiten 14, 16, sensierbar sind. Die Sensoreinheit 18, insbesondere die Sensorelemente 54, 56, 58 der Sensoreinheit 18, ist/sind, insbesondere vor Schmutz und/oder Feuchtigkeit geschützt, innerhalb des Gehäuses 12 angeordnet.

Die Steuer- und/oder Regeleinheit 20 ist vorzugsweise dazu eingerichtet, mittels der Sensoreinheit 18 erfasste Signale, insbesondere mittels der Sensoreinheit 18 erfasste Bewegungen der Radeinheiten 14, 16, zu einer Erkennung eines festgefahrenen Zustands und/oder eines feststeckenden Zustands des autonomen Arbeitsgeräts 10 auszuwerten. Die Steuer- und/oder Regeleinheit 20 ist vorzugsweise dazu eingerichtet, eine mittels der Sensoreinheit 18 erfasste translatorische Bewegung zumindest einer der Radeinheiten 14, 16 entlang zumindest einer der Hochachsen 32, 34, eine rotatorische Bewegung zumindest einer der Radeinheiten 14, 16 um zumindest eine der Hochachsen 32, 34 und/oder eine rotatorische Bewegung zumindest eines der Räder 40, 42 um zumindest eine der Radachsen 28, 30 der Radeinheiten 14, 16, insbesondere in Kombination miteinander, zu einer Erkennung eines festgefahrenen Zustands und/oder eines feststeckenden Zustands des autonomen Arbeitsgeräts 10 auszuwerten. Vorzugsweise ist die Steuer- und/oder Regeleinheit 20 dazu eingerichtet, mittels der Sensoreinheit 18 erfasste Bewegungen der Mehrzahl von Radeinheiten 14, 16, insbesondere in Kombination und/oder relativ zueinander, zu einer Erkennung eines festgefahrenen Zustands und/oder eines feststeckenden Zustands des autonomen Arbeitsgeräts 10 auszuwerten. Bevorzugt ist die Steuer- und/oder Regeleinheit 20 dazu eingerichtet, in Abhängigkeit von einem erkannten festgefahrenen Zustand und/oder feststeckenden Zustand des autonomen Arbeitsgeräts 10 die Antriebseinheit 68 zu einer Wiederherstellung einer Bewegungsfähigkeit des autonomen Arbeitsgeräts 10 anzusteuern und/oder einem Benutzer des autonomen Arbeitsgeräts 10 den festgefahrenen Zustand und/oder den feststeckenden Zustand zu signalisieren.

Bevorzugt umfasst das autonome Arbeitsgerät 10 zumindest eine Antriebsradeinheit 36, 38, insbesondere die vorgenannten Antriebsradeinheit 36, 38, wobei die Steuer- und/oder Regeleinheit 20 zu einer Erkennung eines festgefahrenen Zustands und/oder eines feststeckenden Zustands auf Basis von der Erkennung der Bewegung zumindest einer der Radeinheiten 14, 16 relativ zum Gehäuse 12, insbesondere zumindest im Wesentlichen senkrecht zu einer Hauptfortbewegungsrichtung 26 und zu den Radachsen 28, 30 der Radeinheiten 14, 16, und in Abhängigkeit von einer Rotationsbewegung zumindest einer der Antriebsradeinheiten 36, 38 eingerichtet ist (vgl. Figur 2). Insbesondere ist die Steuer- und/oder Regeleinheit 20 zu einer Erkennung eines festgefahrenen Zustands und/oder eines feststeckenden Zustands auf Basis von der Erkennung einer translatorischen Bewegung der Radeinheiten 14, 16 entlang der Hochachsen 32, 34 und in Abhängigkeit von einer Rotationsbewegung der Antriebsräder 64, 66 um die Radachse 70 der Antriebsradeinheiten 36, 38 eingerichtet. Vorzugsweise sind die Antriebsradeinheiten 36, 38 entlang einer zumindest im Wesentlichen parallel zu den Hochachsen 32, 34 ausgerichteten Richtung betrachtet zumindest im Wesentlichen starr an dem Gehäuse 12 gelagert. Vorzugsweise umfasst das autonome Arbeitsgerät 10 zu einer Erkennung einer Bewegung der Antriebsradeinheiten 36, 38, insbesondere der Antriebsräder 64, 66, zumindest eine weitere, insbesondere zumindest im Wesentlichen analog zu der Sensoreinheit 18 ausgebildete, Sensoreinheit (hier nicht weiter dargestellt). Bevorzugt ist die Steuerund/oder Regeleinheit 20 dazu eingerichtet, von der Sensoreinheit 18 und von der weiteren Sensoreinheit bereitgestellte Signale gemeinsam auszuwerten. Insbesondere ist die Steuer- und/oder Regeleinheit 20 dazu eingerichtet, eine translatorische Bewegung der Radeinheiten 14, 16 entlang der Hochachsen 32, 34 in Abhängigkeit von einer Erkennung einer Rotationsbewegung der Antriebsräder 64, 66 um die Radachse 70 der Antriebsradeinheiten 36, 38, insbesondere in Abhängigkeit von einer Erkennung eines Vorhandenseins einer Rotationsbewegung der Antriebsräder 64, 66 um die Radachse 70 der Antriebsradeinheiten 36, 38, zu einer Erkennung eines festgefahrenen Zustands und/oder eines feststeckenden Zustands des autonomen Arbeitsgeräts 10 auszuwerten.

Bevorzugt ist die Steuer- und/oder Regeleinheit 20 dazu eingerichtet, einen festgefahrenen Zustand und/oder einen feststeckenden Zustand auf Basis von einer Erkennung einer Rotationsbewegung zumindest eines der Räder 40, 42 zumindest einer der Radeinheiten 14, 16 um zumindest eine der Radachsen 28, 30 zumindest einer der Radeinheiten 14, 16 und/oder einer Rotationsbewegung zumindest einer der Radeinheiten 14, 16 um zumindest eine der Hochachsen 32, 34 zumindest einer der Radeinheiten 14, 16 durch die Sensoreinheit 18, insbesondere in Kombination mit einer Erkennung einer translatorischen Bewegung zumindest einer der Radeinheiten 14, 16 zumindest im Wesentlichen senkrecht zu einer Hauptfortbewegungsrichtung 26 und zu zumindest einer der Radachsen 28, 30 zumindest einer der Radeinheiten 14, 16 durch die Sensoreinheit 18, zu erkennen. Vorzugsweise ist die Steuer- und/oder Regeleinheit 20 dazu eingerichtet, eine Rotationsbewegung der Räder 40, 42 um die Radachsen 28, 30 der Radeinheiten 14, 16 und/oder eine Rotationsbewegung der Radeinheiten 14, 16 um die Hochachsen 32, 34 zu einer Erkennung eines Funktionszustands der Erkennung einer translatorischen Bewegung der Radeinheiten 14, 16 entlang der Hochachsen 32, 34 auszuwerten. Beispielsweise ist denkbar, dass eine Schmutzanlagerung eine translatorische Bewegung der Radeinheiten 14, 16 entlang der Hochachsen 32, 34 und eine Rotationsbewegung um die Hochachsen 32, 34 blockiert. Vorzugsweise ist die Steuer- und/oder Regeleinheit 20 dazu eingerichtet, auf Basis von einer Erkennung eines Vorhandenseins einer Rotationsbewegung der Räder 40, 42 der Radeinheiten 14, 16 um die Radachsen 28, 30 der Radeinheiten 14, 16, einer Erkennung eines Ausbleibens einer Rotationsbewegung der Radeinheiten 14, 16 um die Hochachsen 32, 34 und einer Erkennung eines Ausbleibens einer translatorischen Bewegung der Radeinheiten 14, 16 entlang der Hochachsen 32, 34 eine Hemmung der Führungsstangen 80, 82 der Radeinheiten 14, 16 zu erkennen.

Figur 4 zeigt eine Teilansicht des autonomen Arbeitsgeräts 10 aus Fig. 1 in einer schematischen Schnittdarstellung. Bevorzugt umfasst das autonome Arbeitsgerät 10 zumindest eine Lagereinheit 22, 24, insbesondere die vorgenannten Lagereinheiten 22, 24, die zu einer translatorisch entlang zumindest einer der zumindest im Wesentlichen senkrecht zu einer Hauptfortbewegungsrichtung 26 und zu zumindest einer der Radachsen 28, 30 der Radeinheiten 14, 16 ausgerichteten Hochachsen 32, 34 der Radeinheiten 14, 16 beweglichen Lagerung zumindest einer der Radeinheiten 14, 16 an dem Gehäuse 12 vorgesehen ist, wobei die Steuer- und/oder Regeleinheit 20 dazu eingerichtet ist, einen festgefahrenen Zustand und/oder einen feststeckenden Zustand auf Basis von einer Erkennung einer translatorischen Bewegung zumindest einer der Radeinheiten 14, 16 zumindest im Wesentlichen senkrecht zu der Hauptfortbewegungsrichtung 26 und zu den Radachsen 28, 30 der Radeinheiten 14, 16 durch die Sensoreinheit 18 zu erkennen. Insbesondere entspricht eine translatorische Bewegung der Radeinheiten 14, 16 zumindest im Wesentlichen senkrecht zu der Hauptfortbewegungsrichtung 26 des autonomen Arbeitsgeräts 10 und zu den Radachsen 28, 30 der Radeinheiten 14, 16 zumindest im Wesentlichen einer translatorischen Bewegung der Radeinheiten 14, 16 entlang den Hochachsen 32, 34 der Radeinheiten 14, 16. Im vorliegenden Ausführungsbeispiel umfasst das autonome Arbeitsgerät 10 beispielhaft eine Lagereinheit 22 und eine weitere Lagereinheit 24, wobei die Radeinheit 14 der Lagereinheit 22 und die weitere Radeinheit 16 der weiteren Lagereinheit 24 zugeordnet ist. In Figur 4 sind lediglich die weitere Radeinheit 16 und die weitere Lagereinheit 24 dargestellt. Die Beschreibung gilt aber zumindest im Wesentlichen analog auch für die Radeinheit 14 und die Lagereinheit 22. Insbesondere ist jeweils eine der Führungsstangen 80, 82 jeweils einer der Radeinheiten 14, 16 translatorisch und rotatorisch beweglich in jeweils einer der Lagereinheiten 22, 24 gelagert. Insbesondere sind die Lagereinheiten 22, 24 zumindest teilweise als Gleitlager ausgebildet. Vorzugsweise sind die Führungsstangen 80, 82 gegen ein Herausfallen aus den Lagereinheiten 22, 24 gesichert, beispielhaft mittels eines Sprengringelements 84. Vorzugsweise sind die Lagereinheiten 22, 24 zumindest im Wesentlichen schmutz- und/oder wasserdicht abgedichtet, beispielhaft mittels eines Dichtelements 86. Vorzugsweise weisen die Lagereinheiten 22, 24 jeweils zumindest ein Dämpfungselement 88 auf, an dem die jeweilige Radeinheit 14, 16 in einem Normalbetriebszustand des autonomen Arbeitsgeräts 10 zumindest abschnittsweise anliegt.

Vorzugsweise weist die Sensoreinheit 18 zu einer Erfassung einer translatorischen Bewegung der Radeinheiten 14, 16 entlang der Hochachsen 32, 34 die induktiven Sensorelemente 54, 56, insbesondere die Induktivität-zu-Digital-Wandler mit jeweils zumindest einer Spule, auf, durch die sich jeweils eine der Führungsstangen 80, 82 translatorisch bewegt und aufgrund ihrer magnetoresistiven Eigenschaften in Abhängigkeit von unterschiedlichen Positionen relativ zu dem jeweiligen induktiven Sensorelement 54, 56, insbesondere zu der Spule, unterschiedliche elektrische Ströme in der Spule induziert (vgl. Figur 4). Alternativ oder zusätzlich ist denkbar, dass eine translatorische Bewegung der Radeinheiten 14, 16 entlang der Hochachsen 32, 34 mittels eines magnetischen Sensorelements, mittels eines optischen Sensorelements oder mittels eines anderen, einem Fachmann als sinnvoll erscheinenden Sensorelements erkannt wird. Vorzugsweise bewegt sich zumindest eine der Radeinheiten 14, 16 während einer Fortbewegung des autonomen Arbeitsgeräts 10 über einen zumindest teilweise unebenen Untergrund, wie beispielsweise einen Rasen, zumindest im Wesentlichen dauerhaft translatorisch entlang zumindest einer der Hochachsen 32, 34. Insbesondere ist die Steuer- und/oder Regeleinheit 20 dazu eingerichtet, in Abhängigkeit von einem Ausbleiben einer translatorischen Bewegung der Radeinheiten 14, 16 entlang der Hochachsen 32, 34, insbesondere über einen vorbestimmten Zeitraum hinweg, einen festgefahrenen Zustand und/oder einen feststeckenden Zustand des autonomen Arbeitsgeräts 10 zu erkennen. Vorzugsweise ist die Steuer- und/oder Regeleinheit 20 dazu eingerichtet, in Abhängigkeit von einer translatorischen Bewegung der Radeinheiten 14, 16 entlang der Hochachsen 32, 34 zumindest einen zumindest im Wesentlichen vollständig auf einem Untergrund befindlichen Zustand des autonomen Arbeitsgeräts 10 von einem zumindest teilweise von einem Untergrund losgelösten Zustand des autonomen Arbeitsgeräts 10 zu unterscheiden.
Bevorzugt ist die Sensoreinheit 18 dazu eingerichtet, eine Bewegung der Radeinheiten 14, 16 relativ zu dem Gehäuse 12, insbesondere zumindest im Wesentlichen senkrecht zu einer Hauptfortbewegungsrichtung 26 und zu den Radachsen 28, 30 der Radeinheiten 14, 16, in einem Bewegungsbereich zwischen höchstens 1 mm und höchstens 16 mm zu erkennen, in dem die Steuer- und/oder Regeleinheit 20 zu einer Erkennung eines festgefahrenen Zustands und/oder eines feststeckenden Zustands eingerichtet ist. Insbesondere ist die Sensoreinheit 18 dazu eingerichtet, eine translatorische Bewegung der Radeinheiten 14, 16 entlang der Hochachsen 32, 34 in einem Bewegungsbereich zwischen zumindest 1 mm und höchstens 16 mm, bevorzugt in einem Bewegungsbereich zwischen zumindest 0,5 mm und höchstens 16 mm und besonders bevorzugt in einem Bewegungsbereich zwischen zumindest 0,1 mm und höchstens 16 mm zu erkennen. Insbesondere ist die Steuer- und/oder Regeleinheit 20 dazu eingerichtet, auf Basis von der Erkennung einer translatorischen Bewegung der Radeinheiten 14, 16 entlang der Hochachsen 32, 34 einen festgefahrenen Zustand und/oder einen feststeckenden Zustand des autonomen Arbeitsgeräts 10 auf einem Untergrund mit lokalen Höhenunterschieden in einem Bereich zwischen zumindest 1 mm und höchstens 16 mm, bevorzugt in einem Bereich zwischen zumindest 0,5 mm und höchstens 16 mm und besonders bevorzugt in einem Bereich zwischen zumindest 0,1 mm und höchstens 16 mm zu erkennen. Insbesondere weisen die induktiven Sensorelemente 54, 56, insbesondere die Spulen, eine maximale Erstreckung entlang der Hochachsen 32, 34 und/oder eine Sensitivität auf, die eine Erkennung einer translatorischen Bewegung der Radeinheiten 14, 16 entlang der Hochachsen 32, 34 in einem Bewegungsbereich zwischen mindestens 1 mm und höchstens 16 mm, bevorzugt in einem Bewegungsbereich zwischen mindestens 0,5 mm und höchstens 16 mm und besonders bevorzugt in einem Bewegungsbereich zwischen mindestens 0,1 mm und höchstens 16 mm ermöglicht.

Figur 5 zeigt eine Platine 72 des autonomen Arbeitsgeräts 10 aus Fig. 1 in einer schematischen Darstellung. Auf der Platine 72 ist die Steuer- und/oder Regeleinheit 20 angeordnet. Auf der Platine 72 ist/sind zumindest ein Teil der Sensoreinheit 18, insbesondere das induktive Sensorelement 54 und das weitere induktive Sensorelement 56, angeordnet. Die induktiven Sensorelemente 54, 56 sind zumindest teilweise als Spulen ausgebildet. Das induktive Sensorelement 54 begrenzt eine Öffnung 90 in der Platine 72, durch die sich die Führungsstange 80 der Radeinheit 14 während einer translatorischen Bewegung der Radeinheit 14 entlang der Hochachse 32 der Radeinheit 14 zumindest abschnittsweise erstreckt. Das weitere induktive Sensorelement 56 begrenzt eine weitere Öffnung 92 in der Platine 72, durch die sich die Führungsstange 82 der weiteren Radeinheit 16 während einer translatorischen Bewegung der weiteren Radeinheit 16 entlang der Hochachse 34 der weiteren Radeinheit 16 zumindest abschnittsweise erstreckt.

Bevorzugt umfasst das autonome Arbeitsgerät 10 zumindest einen von der Steuer- und/oder Regeleinheit 20 betreibbaren Remobilisationsmodus zu einer Wiederherstellung einer Bewegungsfähigkeit, der auf Basis von der Erkennung der Bewegung zumindest einer der Radeinheiten 14, 16 relativ zum Gehäuse 12, insbesondere zumindest im Wesentlichen senkrecht zu einer Hauptfortbewegungsrichtung 26 und zu den Radachsen 28, 30 der Radeinheiten 14, 16, durch die Sensoreinheit 18 von der Steuer- und/oder Regeleinheit 20 auslösbar ist. Vorzugsweise ist der Remobilisationsmodus in Form von elektronischen Daten, insbesondere Steuerbefehlen, in einer Speichereinheit der Steuer- und/oder Regeleinheit 20 hinterlegt (hier nicht weiter dargestellt). Vorzugsweise ist der Remobilisationsmodus als ein Bewegungsmodus des autonomen Arbeitsgeräts 10 ausgebildet, der zumindest eine Bewegung, insbesondere eine Bewegungsfolge, des autonomen Arbeitsgeräts 10 umfasst. Bevorzugt ist die Steuer- und/oder Regeleinheit 20 dazu eingerichtet, in dem Remobilisationsmodus die Antriebseinheit 68 derart zu steuern und/oder zu regeln, dass das autonome Arbeitsgerät 10 wendet und sich entgegen einer ursprünglichen Fortbewegungsrichtung bewegt. Alternativ ist denkbar, dass das autonome Arbeitsgerät 10 sich in dem Remobilisationsmodus rückwärts entgegen der ursprünglichen Fortbewegungsrichtung bewegt o. dgl.

Figur 6 zeigt ein Ablaufdiagramm eines Verfahrens zum Betrieb eines autonomen Arbeitsgeräts, insbesondere des vorgenannten autonomen Arbeitsgeräts 10, in einer schematischen Darstellung. In zumindest einem Verfahrensschritt 94 wird das autonome Arbeitsgerät 10 in Betrieb genommen, so dass sich das autonome Arbeitsgerät 10 über einen Untergrund, insbesondere über einen Rasen, bewegt.

Bevorzugt wird/werden in zumindest einem weiteren Verfahrensschritt 44 ein festgefahrener Zustand und/oder ein feststeckender Zustand des autonomen Arbeitsgeräts 10 auf Basis von einer Erkennung einer Bewegung zumindest einer Radeinheit 14, 16 des autonomen Arbeitsgeräts 10 relativ zu zumindest einem Gehäuse 12 des autonomen Arbeitsgeräts 10 erkannt. Bevorzugt wird/werden zumindest in dem weiteren Verfahrensschritt 44 ein festgefahrener Zustand und/oder ein feststeckender Zustand des autonomen Arbeitsgeräts 10 auf Basis von der Erkennung der Bewegung zumindest einer der Radeinheiten 14, 16 relativ zu dem Gehäuse 12 erkannt, wobei die Bewegung zumindest einer der Radeinheiten 14, 16 mittels zumindest eines induktiven Sensorelements 54, 56, insbesondere zumindest eines Induktivität-zu-Digital-Wandlers, mittels zumindest eines magnetischen Sensorelements 58, insbesondere zumindest eines Reedschalters und/oder zumindest eines Hall-Sensors, und/oder mittels zumindest eines optischen Sensorelements zumindest einer Sensoreinheit 18 des autonomen Arbeitsgeräts 10 erkannt wird.

Bevorzugt wird in zumindest einem weiteren Verfahrensschritt 96 eine Rotationsbewegung der Antriebsräder 64, 66 der Antriebsradeinheiten 36, 38 erkannt. Der weitere Verfahrensschritt 96 ist insbesondere als ein Unterverfahrensschritt des weiteren Verfahrensschritts 44 ausgebildet. Vorzugsweise wird in Abhängigkeit von einer Erkennung eines Ausbleibens einer Rotationsbewegung der Antriebsräder 64, 66 in zumindest einem weiteren Verfahrensschritt 98 zumindest eine Fehlermeldung, insbesondere hinsichtlich der Antriebseinheit 68 und/oder hinsichtlich der Antriebsradeinheiten 36, 38, an einen Benutzer des autonomen Arbeitsgeräts 10 ausgegeben.

Bevorzugt wird/werden in zumindest einem weiteren Verfahrensschritt 46, insbesondere in Abhängigkeit von einer Erkennung eines Vorhandenseins einer Rotationsbewegung zumindest eines der Antriebsräder 64, 66, ein festgefahrener Zustand und/oder ein feststeckender Zustand des autonomen Arbeitsgeräts 10 auf Basis von einer Erkennung einer translatorischen Bewegung zumindest einer der Radeinheiten 14, 16 zumindest im Wesentlichen senkrecht zu einer Hauptfortbewegungsrichtung 26 des autonomen Arbeitsgeräts 10 und zu den Radachsen 28, 30 der Radeinheiten 14, 16 erkannt. Der weitere Verfahrensschritt 46 ist insbesondere als ein Unterverfahrensschritt des weiteren Verfahrensschritts 44 ausgebildet.

Bevorzugt wird/werden in zumindest einem weiteren Verfahrensschritt 48 ein festgefahrener Zustand und/oder ein feststeckender Zustand des autonomen Arbeitsgeräts 10 auf Basis von der Erkennung der Bewegung zumindest einer der Radeinheiten 14, 16 relativ zum Gehäuse 12, insbesondere zumindest im Wesentlichen senkrecht zu einer Hauptfortbewegungsrichtung 26 des autonomen Arbeitsgeräts 10 und zu den Radachsen 28, 30 der Radeinheiten 14, 16, und in Abhängigkeit von einer Rotationsbewegung zumindest einer Antriebsradeinheit 36, 38 des autonomen Arbeitsgeräts 10 erkannt. Der weitere Verfahrensschritt 48 ist insbesondere als ein Unterverfahrensschritt des weiteren Verfahrensschritts 44 ausgebildet. Insbesondere umfasst der weitere Verfahrensschritt 48 den weiteren Verfahrensschritt 96 und den weiteren Verfahrensschritt 46.

Bevorzugt wird in zumindest einem weiteren Verfahrensschritt 50 ein Remobilisationsmodus des autonomen Arbeitsgeräts 10 zu einer Wiederherstellung einer Bewegungsfähigkeit auf Basis von der Erkennung der Bewegung der Radeinheiten 14, 16, insbesondere auf Basis von einer Erkennung eines Ausbleibens einer Bewegung der Radeinheiten 14, 16, relativ zum Gehäuse 12, insbesondere zumindest im Wesentlichen senkrecht zu einer Hauptfortbewegungsrichtung 26 des autonomen Arbeitsgeräts 10 und zu den Radachsen 28, 30 der Radeinheiten 14, 16, ausgelöst.

Bevorzugt wird/werden in zumindest einem weiteren Verfahrensschritt 52 ein festgefahrener Zustand und/oder ein feststeckender Zustand des autonomen Arbeitsgeräts 10 auf Basis von einer Erkennung einer Rotationsbewegung zumindest eines Rads 40, 42 zumindest einer der Radeinheiten 14, 16 um zumindest eine der Radachsen 28, 30 zumindest einer der Radeinheiten 14, 16 und/oder einer Rotationsbewegung zumindest einer der Radeinheiten 14, 16 um zumindest eine der Hochachsen 32, 34 zumindest einer der Radeinheiten 14, 16, insbesondere in Kombination mit einer Erkennung einer translatorischen Bewegung zumindest einer der Radeinheiten 14, 16 zumindest im Wesentlichen senkrecht zu einer Hauptfortbewegungsrichtung 26 und zu den Radachsen 28, 30 der Radeinheiten 14, 16, erkannt. Insbesondere ist der weitere Verfahrensschritt 52 als ein Unterverfahrensschritt des weiteren Verfahrensschritts 44 ausgebildet.

Bevorzugt wird in zumindest einem weiteren Verfahrensschritt 100, insbesondere in Abhängigkeit von einer Erkennung eines Vorhandenseins einer translatorischen Bewegung zumindest einer der Radeinheiten 14, 16 entlang zumindest einer der Hochachsen 32, 34, eine Fortbewegung des autonomen Arbeitsgeräts 10 fortgesetzt.

Hinsichtlich weiterer Verfahrensschritte des Verfahrens zum Betrieb des autonomen Arbeitsgeräts 10 darf auf die vorhergehende Beschreibung des autonomen Arbeitsgeräts 10 verwiesen werden, da diese Beschreibung analog auch auf das Verfahren zu lesen ist und somit alle Merkmale hinsichtlich des autonomen Arbeitsgeräts 10 auch in Bezug auf das Verfahren zum Betrieb des autonomen Arbeitsgeräts 10 als offenbart gelten.

## Patentansprüche

1. Autonomes Arbeitsgerät, insbesondere Rasenmähroboter, mit zumindest einem Gehäuse (12), mit zumindest einer, insbesondere antriebsfreien, Radeinheit (14, 16), mit zumindest einer Sensoreinheit (18) zu einer Erkennung einer Bewegung der Radeinheit (14, 16) relativ zu dem Gehäuse (12) und mit zumindest einer Steuer- und/oder Regeleinheit (20) zumindest zu einer Verarbeitung von mittels der Sensoreinheit (18) erfassten Signalen, **dadurch gekennzeichnet, dass** die Steuer- und/oder Regeleinheit (20) zu einer Erkennung eines festgefahrenen Zustands und/oder eines feststeckenden Zustands auf Basis von der Erkennung der Bewegung der zumindest einen Radeinheit (14, 16) relativ zum Gehäuse (12) durch Erfassung einer translatorischen Bewegung der Radeinheit entlang der Hochachse und/oder durch Erfassung einer rotatorischen Bewegung der Radeinheit um die Hochachse durch die Sensoreinheit (18) eingerichtet ist, wobei die Hochachse im Wesentlichen senkrecht zu einer Hauptfortbewegungsrichtung (26) und zu einer Radachse (28, 30) der Radeinheit (14, 16) ausgebildet ist.

2. Autonomes Arbeitsgerät nach Anspruch 1, **gekennzeichnet durch** zumindest eine Lagereinheit (22, 24), die zu einer translatorisch entlang einer zumindest im Wesentlichen senkrecht zu einer Hauptfortbewegungsrichtung (26) und zu einer Radachse (28, 30) der Radeinheit (14, 16) ausgerichteten Hochachse (32, 34) der Radeinheit (14, 16) beweglichen Lagerung der Radeinheit (14, 16) an dem Gehäuse (12) vorgesehen ist, wobei die Steuer- und/oder Regeleinheit (20) dazu eingerichtet ist, einen festgefahrenen Zustand und/oder einen feststeckenden Zustand auf Basis von einer Erkennung einer translatorischen Bewegung der Radeinheit (14, 16) zumindest im Wesentlichen senkrecht zu der Hauptfortbewegungsrichtung (26) und zu der Radachse (28, 30) der Radeinheit (14, 16) durch die Sensoreinheit (18) zu erkennen.

3. Autonomes Arbeitsgerät nach Anspruch 1 oder 2, **dadurch gekennzeichnet, dass** die Sensoreinheit (18) dazu eingerichtet ist, eine Bewegung der Radeinheit (14, 16) relativ zu dem Gehäuse (12), insbesondere zumindest im Wesentlichen senkrecht zu einer Hauptfortbewegungsrichtung (26) und zu einer Radachse (28, 30) der Radeinheit (14, 16), in einem Bewegungsbereich zwischen höchstens 1 mm und höchstens 16 mm zu erkennen, in dem die Steuer- und/oder Regeleinheit (20) zu einer Erkennung eines festgefahrenen Zustands und/oder eines feststeckenden Zustands eingerichtet ist.

4. Autonomes Arbeitsgerät nach einem der vorhergehenden Ansprüche, **gekennzeichnet durch** zumindest einen von der Steuer- und/oder Regeleinheit (20) betreibbaren Remobilisationsmodus zu einer Wiederherstellung einer Bewegungsfähigkeit, der auf Basis von der Erkennung der Bewegung der Radeinheit (14, 16) relativ zum Gehäuse (12), insbesondere zumindest im Wesentlichen senkrecht zu einer Hauptfortbewegungsrichtung (26) und zu einer Radachse (28, 30) der Radeinheit (14, 16), durch die Sensoreinheit (18) von der Steuer- und/oder Regeleinheit (20) auslösbar ist.

5. Autonomes Arbeitsgerät nach einem der vorhergehenden Ansprüche, **gekennzeichnet durch** zumindest eine Antriebsradeinheit (36, 38), wobei die Steuer- und/oder Regeleinheit (20) zu einer Erkennung eines festgefahrenen Zustands und/oder eines feststeckenden Zustands auf Basis von der Erkennung der Bewegung der Radeinheit (14, 16) relativ zum Gehäuse (12), insbesondere zumindest im Wesentlichen senkrecht zu einer Hauptfortbewegungsrichtung (26) und zu einer Radachse (28, 30) der Radeinheit (14, 16), und in Abhängigkeit von einer Rotationsbewegung der Antriebsradeinheit (36, 38) eingerichtet ist.

6. Autonomes Arbeitsgerät nach einem der vorhergehenden Ansprüche, **dadurch gekennzeichnet, dass** die Steuer- und/oder Regeleinheit (20) dazu eingerichtet ist, einen festgefahrenen Zustand und/oder einen feststeckenden Zustand auf Basis von einer Erkennung einer Rotationsbewegung zumindest eines Rads (40, 42) der Radeinheit (14, 16) um eine Radachse (28, 30) der Radeinheit (14, 16) und/oder einer Rotationsbewegung der Radeinheit (14, 16) um eine Hochachse (32, 34) der Radeinheit (14, 16) durch die Sensoreinheit (18), insbesondere in Kombination mit einer Erkennung einer translatorischen Bewegung der Radeinheit (14, 16) zumindest im Wesentlichen senkrecht zu einer Hauptfortbewegungsrichtung (26) und zu einer Radachse (28, 30) der Radeinheit (14, 16) durch die Sensoreinheit (18), zu erkennen.

7. Verfahren zu einem Betrieb eines autonomen Arbeitsgeräts, insbesondere eines autonomen Arbeitsgeräts nach einem der vorhergehenden Ansprüche, **dadurch gekennzeichnet, dass** in zumindest einem Verfahrensschritt (44) ein festgefahrener Zustand und/oder ein feststeckender Zustand des autonomen Arbeitsgeräts auf Basis von einer Erkennung einer Bewegung zumindest einer Radeinheit (14, 16) des autonomen Arbeitsgeräts relativ zu zumindest einem Gehäuse (12) des autonomen Arbeitsgeräts, durch Erfassung einer translatorischen Bewegung der Radeinheit entlang der Hochachse und/oder durch Erfassung einer rotatorischen Bewegung der Radeinheit um die Hochachse durch eine Sensoreinheit (18), erkannt wird/werden, wobei die Hochachse im Wesentlichen senkrecht zu einer Hauptfortbewegungsrichtung (26) und zu einer Radachse (28, 30) der Radeinheit (14, 16) ausgebildet ist).

8. Verfahren nach Anspruch 7, **dadurch gekennzeichnet, dass** in zumindest einem Verfahrensschritt (46) ein festgefahrener Zustand und/oder ein feststeckender Zustand des autonomen Arbeitsgeräts auf Basis von einer Erkennung einer translatorischen Bewegung der Radeinheit (14, 16) zumindest im Wesentlichen senkrecht zu einer Hauptfortbewegungsrichtung (26) des autonomen Arbeitsgeräts und zu einer Radachse (28, 30) der Radeinheit (14, 16) erkannt wird/werden.

9. Verfahren nach Anspruch 7 oder 8, **dadurch gekennzeichnet, dass** in zumindest einem Verfahrensschritt (48) ein festgefahrener Zustand und/oder ein feststeckender Zustand des autonomen Arbeitsgeräts auf Basis von der Erkennung der Bewegung der Radeinheit (14, 16) relativ zum Gehäuse (12), insbesondere zumindest im Wesentlichen senkrecht zu einer Hauptfortbewegungsrichtung (26) des autonomen Arbeitsgeräts und zu einer Radachse (28, 30) der Radeinheit (14, 16), und in Abhängigkeit von einer Rotationsbewegung zumindest einer Antriebsradeinheit (36, 38) des autonomen Arbeitsgeräts erkannt wird/werden.

10. Verfahren nach einem der Ansprüche 7 bis 9, **dadurch gekennzeichnet, dass** in zumindest einem Verfahrensschritt (50) ein Remobilisationsmodus des autonomen Arbeitsgeräts zu einer Wiederherstellung einer Bewegungsfähigkeit auf Basis von der Erkennung der Bewegung der Radeinheit (14, 16) relativ zum Gehäuse (12), insbesondere zumindest im Wesentlichen senkrecht zu einer Hauptfortbewegungsrichtung (26) des autonomen Arbeitsgeräts und zu einer Radachse (28, 30) der Radeinheit (14, 16), ausgelöst wird.

11. Verfahren nach einem der Ansprüche 7 bis 10, **dadurch gekennzeichnet, dass** in zumindest einem Verfahrensschritt (52) ein festgefahrener Zustand und/oder ein feststeckender Zustand des autonomen Arbeitsgeräts auf Basis von einer Erkennung einer Rotationsbewegung zumindest eines Rads (40, 42) der Radeinheit (14, 16) um eine Radachse (28, 30) der Radeinheit (14, 16) und/oder einer Rotationsbewegung der Radeinheit (14, 16) um eine Hochachse (32, 34) der Radeinheit (14, 16), insbesondere in Kombination mit einer Erkennung einer translatorischen Bewegung der Radeinheit (14, 16) zumindest im Wesentlichen senkrecht zu einer Hauptfortbewegungsrichtung (26) und zu einer Radachse (28, 30) der Radeinheit (14, 16), erkannt wird/werden.

## Claims

1. Autonomous work device, in particular lawnmower robot, comprising at least one housing (12), comprising at least one, in particular drive-free, wheel unit (14, 16), comprising at least one sensor unit (18) for identifying a movement of the wheel unit (14, 16) relative to the housing (12), and comprising at least one open-loop control and/or closed-loop control unit (20) at least for processing signals detected by means of the sensor unit (18), **characterized in that** the open-loop control and/or closed-loop control unit (20) is designed to identify a stuck state and/or a caught state on the basis of identifying the movement of the at least one wheel unit (14, 16) relative to the housing (12) by detecting a translational movement of the wheel unit along the vertical axis and/or by detecting a rotational movement of the wheel unit about the vertical axis using the sensor unit (18), wherein the vertical axis is formed substantially perpendicularly to a main direction of travel (26) and to a wheel axle (28, 30) of the wheel unit (14, 16).

2. Autonomous work device according to Claim 1, **characterized by** at least one bearing unit (22, 24) which is provided for bearing the wheel unit (14, 16) on the housing (12) such that it can move translationally along a vertical axis (32, 34) of the wheel unit (14, 16), which vertical axis is oriented at least substantially perpendicularly to a main direction of travel (26) and to a wheel axle (28, 30) of the wheel unit (14, 16), wherein the open-loop control and/or closed-loop control unit (20) is designed to identify a stuck state and/or a caught state on the basis of identifying a translational movement of the wheel unit (14, 16) at least substantially perpendicularly to the main direction of travel (26) and to the wheel axle (28, 30) of the wheel unit (14, 16) using the sensor unit (18).

3. Autonomous work device according to Claim 1 or 2, **characterized in that** the sensor unit (18) is designed to identify a movement of the wheel unit (14, 16) relative to the housing (12), in particular at least substantially perpendicularly to a main direction of travel (26) and to a wheel axle (28, 30) of the wheel unit (14, 16), in a movement range of between at most 1 mm and at most 16 mm by way of the open-loop control and/or closed-loop control unit (20) being designed to identify a stuck state and/or a caught state.

4. Autonomous work device according to one of the preceding claims, **characterized by** at least one remobilization mode, which can be operated by the open-loop control and/or closed-loop control unit (20), for re-establishing an ability to move which can be triggered by the open-loop control and/or closed-loop control unit (20) on the basis of identifying the movement of the wheel unit (14, 16) relative to the housing (12), in particular at least substantially perpendicularly to a main direction of travel (26) and to a wheel axle (28, 30) of the wheel unit (14, 16), using the sensor unit (18) .

5. Autonomous work device according to one of the preceding claims, **characterized by** at least one drive wheel unit (36, 38), wherein the open-loop control and/or closed-loop control unit (20) is designed to identify a stuck state and/or a caught state on the basis of identifying the movement of the wheel unit (14, 16) relative to the housing (12), in particular at least substantially perpendicularly to a main direction of travel (26) and to a wheel axle (28, 30) of the wheel unit (14, 16), and depending on a rotation movement of the drive wheel unit (36, 38).

6. Autonomous work device according to one of the preceding claims, **characterized in that** the open-loop control and/or closed-loop control unit (20) is designed to identify a stuck state and/or a caught state on the basis of identifying a rotation movement of at least one wheel (40, 42) of the wheel unit (14, 16) about a wheel axle (28, 30) of the wheel unit (14, 16) and/or a rotation movement of the wheel unit (14, 16) about a vertical axis (32, 34) of the wheel unit (14, 16) using the sensor unit (18), in particular in combination with identifying a translational movement of the wheel unit (14, 16) at least substantially perpendicularly to a main direction of travel (26) and to a wheel axle (28, 30) of the wheel unit (14, 16) using the sensor unit (18).

7. Method for operating an autonomous work device, in particular an autonomous work device according to one of the preceding claims, **characterized in that**, in at least one method step (44), a stuck state and/or a caught state of the autonomous work device are/is identified on the basis of identifying a movement of at least one wheel unit (14, 16) of the autonomous work device relative to at least one housing (12) of the autonomous work device by detecting a translational movement of the wheel unit along the vertical axis and/or by detecting a rotational movement of the wheel unit about the vertical axis using a sensor unit (18), wherein the vertical axis is formed substantially perpendicularly to a main direction of travel (26) and to a wheel axle (28, 30) of the wheel unit (14, 16).

8. Method according to Claim 7, **characterized in that**, in at least one method step (46), a stuck state and/or a caught state of the autonomous work device are/is identified on the basis of identifying a translational movement of the wheel unit (14, 16) at least substantially perpendicularly to a main direction of travel (26) of the autonomous work device and to a wheel axle (28, 30) of the wheel unit (14, 16).

9. Method according to Claim 7 or 8, **characterized in that**, in at least one method step (48), a stuck state and/or a caught state of the autonomous work device are/is identified on the basis of identifying the movement of the wheel unit (14, 16) relative to the housing (12), in particular at least substantially perpendicularly to a main direction of travel (26) of the autonomous work device and to a wheel axle (28, 30) of the wheel unit (14, 16), and depending on a rotation movement of at least one drive wheel unit (36, 38) of the autonomous work device.

10. Method according to one of Claims 7 to 9, **characterized in that**, in at least one method step (50), a remobilization mode of the autonomous work device to re-establish an ability to move is triggered on the basis of identifying the movement of the wheel unit (14, 16) relative to the housing (12), in particular at least substantially perpendicularly to a main direction of travel (26) of the autonomous work device and to a wheel axle (28, 30) of the wheel unit (14, 16).

11. Method according to one of Claims 7 to 10, **characterized in that**, in at least one method step (52), a stuck state and/or a caught state of the autonomous work device are/is identified on the basis of identifying a rotation movement of at least one wheel (40, 42) of the wheel unit (14, 16) about a wheel axle (28, 30) of the wheel unit (14, 16) and/or a rotation movement of the wheel unit (14, 16) about a vertical axis (32, 34) of the wheel unit (14, 16), in particular in combination with identifying a translational movement of the wheel unit (14, 16) at least substantially perpendicularly to a main direction of travel (26) and to a wheel axle (28, 30) of the wheel unit (14, 16).

## Revendications

1. Engin de travail autonome, en particulier robot tondeuse de gazon, comprenant au moins un carter (12), au moins une unité de roue (14, 16), en particulier sans entraînement, au moins une unité de capteur (18) destinée à reconnaître un mouvement de l'unité de roue (14, 16) par rapport au carter (12), et au moins une unité de commande et/ou de régulation (20) destinée au moins à un traitement de signaux détectés au moyen de l'unité de capteur (18),
**caractérisé en ce que** l'unité de commande et/ou de régulation (20) est aménagée pour reconnaître un état enlisé et/ou un état coincé sur la base de la reconnaissance du mouvement de ladite au moins une unité de roue (14, 16) par rapport au carter (12) par la détection d'un mouvement en translation de l'unité de roue le long de l'axe vertical et/ou par la détection d'un mouvement en rotation de l'unité de roue autour de l'axe vertical par l'unité de capteur (18), l'axe vertical étant réalisé de manière substantiellement perpendiculaire à une direction de déplacement principale (26) et à un essieu (28, 30) de l'unité de roue (14, 16).

2. Engin de travail autonome selon la revendication 1, **caractérisé par** au moins une unité de palier (22, 24) qui est prévue pour un montage de l'unité de roue (14, 16) sur le carter (12), mobile en translation le long d'un axe vertical (32, 34) de l'unité de roue (14, 16) orienté de manière au moins substantiellement perpendiculaire à une direction de déplacement principale (26) et à un essieu (28, 30) de l'unité de roue (14, 16), l'unité de commande et/ou de régulation (20) étant aménagée pour reconnaître un état enlisé et/ou un état coincé sur la base d'une reconnaissance d'un mouvement en translation de l'unité de roue (14, 16) de manière au moins substantiellement perpendiculaire à la direction de déplacement principale (26) et à l'essieu (28, 30) de l'unité de roue (14, 16) par l'unité de capteur (18).

3. Engin de travail autonome selon la revendication 1 ou 2, **caractérisé en ce que** l'unité de capteur (18) est aménagée pour reconnaître un mouvement de l'unité de roue (14, 16) par rapport au carter (12), en particulier de manière au moins substantiellement perpendiculaire à une direction de déplacement principale (26) et à un essieu (28, 30) de l'unité de roue (14, 16), dans une plage de mouvement entre au maximum 1 mm et au maximum 16 mm dans laquelle l'unité de commande et/ou de régulation (20) est aménagée pour reconnaître un état enlisé et/ou un état coincé.

4. Engin de travail autonome selon l'une quelconque des revendications précédentes, **caractérisé par** au moins un mode de remobilisation pouvant être actionné par l'unité de commande et/ou de régulation (20) pour rétablir une capacité de mouvement qui peut être déclenché par l'unité de capteur (18) de l'unité de commande et/ou de régulation (20) sur la base de la reconnaissance du mouvement de l'unité de roue (14, 16) par rapport au carter (12), en particulier de manière au moins substantiellement perpendiculaire à une direction de déplacement principale (26) et à un essieu (28, 30) de l'unité de roue (14, 16).

5. Engin de travail autonome selon l'une quelconque des revendications précédentes, **caractérisé par** au moins une unité de roue motrice (36, 38), l'unité de commande et/ou de régulation (20) étant aménagée pour reconnaître un état enlisé et/ou un état coincé sur la base de la reconnaissance du mouvement de l'unité de roue (14, 16) par rapport au carter (12), en particulier de manière au moins substantiellement perpendiculaire à une direction de déplacement principale (26) et à un essieu (28, 30) de l'unité de roue (14, 16), et en fonction d'un mouvement en rotation de l'unité de roue motrice (36, 38).

6. Engin de travail autonome selon l'une quelconque des revendications précédentes, **caractérisé en ce que** l'unité de commande et/ou de régulation (20) est aménagée pour reconnaître par l'unité de capteur (18) un état enlisé et/ou un état coincé sur la base d'une reconnaissance d'un mouvement en rotation d'au moins une roue (40, 42) de l'unité de roue (14, 16) autour d'un essieu (28, 30) de l'unité de roue (14, 16) et/ou d'un mouvement en rotation de l'unité de roue (14, 16) autour d'un axe vertical (32, 34) de l'unité de roue (14, 16), en particulier en combinaison avec une reconnaissance par l'unité de capteur (18) d'un mouvement en translation de l'unité de roue (14, 16) de manière au moins substantiellement perpendiculaire à une direction de déplacement principale (26) et à un essieu (28, 30) de l'unité de roue (14, 16).

7. Procédé permettant de faire fonctionner un engin de travail autonome, en particulier un engin de travail autonome selon l'une quelconque des revendications précédentes, **caractérisé en ce que** dans au moins une étape de procédé (44) un état enlisé et/ou un état coincé de l'engin de travail autonome est/sont reconnu (s) par une unité de capteur (18) sur la base d'une reconnaissance d'un mouvement d'au moins une unité de roue (14, 16) de l'engin de travail autonome par rapport à au moins un carter (12) de l'engin de travail autonome, par la reconnaissance d'un mouvement en translation de l'unité de roue le long de l'axe vertical et/ou par la reconnaissance d'un mouvement en rotation de l'unité de roue autour de l'axe vertical, l'axe vertical étant réalisé de manière substantiellement perpendiculaire à une direction de déplacement principale (26) et à un essieu (28, 30) de l'unité de roue (14, 16).

8. Procédé selon la revendication 7, **caractérisé en ce que** dans au moins une étape de procédé (46), un état enlisé et/ou un état coincé de l'engin de travail autonome est/sont reconnu(s) sur la base d'une reconnaissance d'un mouvement en translation de l'unité de roue (14, 16) de manière au moins substantiellement perpendiculaire à une direction de déplacement principale (26) de l'engin de travail autonome et à un essieu (28, 30) de l'unité de roue (14, 16).

9. Procédé selon la revendication 7 ou 8, **caractérisé en ce que** dans au moins une étape de procédé (48), un état enlisé et/ou un état coincé de l'engin de travail autonome est/sont reconnu (s) sur la base de la reconnaissance du mouvement de l'unité de roue (14, 16) par rapport au carter (12), en particulier de manière au moins substantiellement perpendiculaire à une direction de déplacement principale (26) de l'engin de travail autonome et à un essieu (28, 30) de l'unité de roue (14, 16), et en fonction d'un mouvement en rotation d'au moins une unité de roue motrice (36, 38) de l'engin de travail autonome.

10. Procédé selon l'une quelconque des revendications 7 à 9, **caractérisé en ce que** dans au moins une étape de procédé (50), un mode de remobilisation de l'engin de travail autonome pour un rétablissement d'une capacité de mouvement est déclenché sur la base de la reconnaissance du mouvement de l'unité de roue (14, 16) par rapport au carter (12), en particulier de manière au moins substantiellement perpendiculaire à une direction de déplacement principale (26) de l'engin de travail autonome et à un essieu (28, 30) de l'unité de roue (14, 16).

11. Procédé selon l'une quelconque des revendications 7 à 10, **caractérisé en ce que** dans au moins une étape de procédé (52), un état enlisé et/ou un état coincé de l'engin de travail autonome est/sont reconnu(s) sur la base d'une reconnaissance d'un mouvement en rotation au moins d'une roue (40, 42) de l'unité de roue (14, 16) autour d'un essieu (28, 30) de l'unité de roue (14, 16) et/ou d'un mouvement en rotation de l'unité de roue (14, 16) autour d'un axe vertical (32, 34) de l'unité de roue (14, 16), en particulier en combinaison avec une reconnaissance d'un mouvement en translation de l'unité de roue (14, 16) de manière au moins substantiellement perpendiculaire à une direction de déplacement principale (26) et à un essieu (28, 30) de l'unité de roue (14, 16).
